(19) Europäisches Patentamt / European Patent Office / Office européen des brevets

(11) **EP 4 685 187 A1**

(12) **EUROPEAN PATENT APPLICATION**
published in accordance with Art. 153(4) EPC

(43) Date of publication:
**28.01.2026 Bulletin 2026/05**

(21) Application number: **24796969.4**

(22) Date of filing: **22.04.2024**

(51) International Patent Classification (IPC):
***C08L 63/00** (2006.01)* ***C08J 3/12** (2006.01)*
***C08K 3/013** (2018.01)* ***C08K 7/02** (2006.01)*

(52) Cooperative Patent Classification (CPC):
**C08J 3/12; C08K 3/013; C08K 7/02; C08L 63/00**

(86) International application number:
**PCT/JP2024/015723**

(87) International publication number:
**WO 2024/225223 (31.10.2024 Gazette 2024/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **24.04.2023 JP 2023071045**
**24.04.2023 JP 2023071046**

(71) Applicant: **Sumitomo Bakelite Co.Ltd.**
**Shinagawa-ku**
**Tokyo 140-0002 (JP)**

(72) Inventors:
- **MOCHIZUKI, Shunsuke**
  **Tokyo 140-0002 (JP)**
- **KUWABARA, Toshihisa**
  **Tokyo 140-0002 (JP)**
- **KOBAYASHI, Shinichiro**
  **Tokyo 140-0002 (JP)**

(74) Representative: **Müller-Boré & Partner Patentanwälte PartG mbB**
**Friedenheimer Brücke 21**
**80639 München (DE)**

(54) **EPOXY RESIN COMPOSITION PARTICLE, TABLET, AND METHOD FOR PRODUCING COLUMNAR TABLET**

(57) The epoxy resin composition particles of the present invention are epoxy resin composition particles used for any of magnet fixing, electronic control unit encapsulation, coil encapsulation, or stator core encapsulation, and include an epoxy resin and a fibrous or acicular filler.

EP 4 685 187 A1

## Description

TECHNICAL FIELD

The present invention relates to an epoxy resin composition particle, a tablet, and a method for producing a columnar tablet.

BACKGROUND ART

Various developments have been made so far on a molding method for a tablet-shaped epoxy resin composition. As this kind of technology, for example, the technology described in Patent Document 1 is known. Patent Document 1 describes a method for transfer-molding a tablet-shaped epoxy resin composition in which an inorganic filler such as quartz glass powder, talc, silica powder, alumina powder, or calcium carbonate is blended, in order to encapsulate a semiconductor element (claim 1, paragraphs 0005, 0030, and the like of Patent Document 1).

RELATED DOCUMENT

PATENT DOCUMENT

Patent Document 1: Japanese Unexamined Patent Publication No. 9-208805

SUMMARY OF THE INVENTION

TECHNICAL PROBLEM

However, as a result of studies conducted by the present inventors, it has been found that there is room for improvement in the tablet-shaped epoxy resin composition described in Patent Document 1 in terms of flexural modulus.

Furthermore, in a molded body in the related art having a skew structure using an epoxy resin composition, a phenomenon in which a gap is generated on a discontinuous surface of the molded body (a misaligned portion of the molded body) has been confirmed.

SOLUTION TO PROBLEM

As a result of further studies, the present inventors have found that since mechanical characteristics such as the flexural modulus of a molded body may be improved by using epoxy resin composition particles containing an epoxy resin and a fibrous or acicular filler, a molding material suitable for any of magnet fixing, electronic control unit encapsulation, coil encapsulation, or stator core encapsulation may be realized, thus completing a first invention.

In addition, the present inventors paid attention to molded bodies having a skew structure, which are formed using epoxy resin compositions in the related art. In a case where a rotor core having a skew structure is filled with a material for magnet fixing, it is considered that destruction of the material for magnet fixing occurs starting from a corner part of the magnet that serves as a portion hindering the flow, and a gap is generated.

As a result of further studies, the present inventors have found that the extent of gap in a case where the skew structure is filled with the material for magnet fixing may be stably evaluated by using the fracture toughness value of the material for magnet fixing as an index. The present inventors further conducted a thorough investigation based on the findings and found that when a fibrous or acicular filler is used and a moderately high kneading temperature is employed, the fracture toughness value in the epoxy resin composition particles may be increased to a predetermined level or higher, and thereby the occurrence of a gap in a case where a skew structure is filled with the epoxy resin composition particles may be suppressed, thus completing a second invention.

According to the present invention, the following epoxy resin composition particle and a technology related thereto are provided.

[1] An epoxy resin composition particle used for any of magnet fixing, electronic control unit encapsulation, coil encapsulation, or stator core encapsulation, the epoxy resin composition particle including:

an epoxy resin; and
a fibrous or acicular filler.

[2] An epoxy resin composition particle used for magnet fixing, the epoxy resin composition particle including:

an epoxy resin; and
a fibrous or acicular filler,
in which a fracture toughness value (K1c) measured by the following procedure i is equal to or more than 3.0 $MPa\cdot m^{1/2}$,
(procedure i)
using a transfer molding machine, a molded body is molded from the epoxy resin composition particles under molding conditions of a mold temperature of 175°C, an injection pressure of 9.8 MPa, and a curing time of 120 seconds,
according to a KIc method standardized in ASTM D5045-14, the obtained molded body is adjusted to a size of a length of 50 mm, a width B of 5 mm, and a thickness W of 10 mm, a notch having a depth of 3.5 mm in a thickness direction is formed in a central part in a length direction, and the obtained molded body is cured at 175°C for 4 hours to obtain a cured product, a scratch having a depth of 0.1 mm in the thickness direction is made with a razor on a notch tip portion of the cured product, and a test piece having a total crack length a = 3.6 mm is produced, subsequently, the obtained test piece is subjected to a three-point bending test using a tensile compression tester at a measurement temperature of 25°C, a speed of 10 mm/min, and a distance S between fulcrums of 40 mm, and a fracture toughness value (K1c ($MPa\cdot m^{1/2}$)) is calculated based on the following expression, and in the following expression, $P_Q$ is a maximum load (N):

$$KI_C = ((P_Q \times S)/(B \times W^{3/2})) \times f(a/W)$$

provided that $f(a/W) = (3(a/W)^{1/2}[1.99 - (a/W)(1 - a/W)\{2.15 - 3.9(a/W) + 2.7(a/W)^2\}])/(2\{1 + 2(a/W)\}\{1 - (a/W)\}^{3/2})$.

[3] The epoxy resin composition particle according to [1] or [2],

in which a number average fiber length of the fibrous or acicular filler, which is measured by the following procedure A, is equal to or more than 5 μm and equal to or less than 500 μm,
(procedure A)
the epoxy resin composition particles are dissolved in acetone to remove a resin component, subsequently insoluble components are dispersed on a glass plate, an image of the filler in the insoluble components is captured using an optical microscope, and a fiber length is measured using an image analyzer; and an average value of the fiber lengths of 100 pieces of the filler, starting from a longest fiber length, is defined as the number average fiber length.

[4] The epoxy resin composition particle according to any one of [1] to [3],

in which when a number average fiber length of the fibrous or acicular filler measured by the following procedure A is denoted by L, and a number average fiber diameter of the fibrous or acicular filler measured by the following procedure B is denoted by D,
L/D is equal to or more than 3 and equal to or less than 100,
(procedure A)
the epoxy resin composition particles are dissolved in acetone to remove a resin component, subsequently insoluble components are dispersed on a glass plate, an image of the filler in the insoluble components is captured using an optical microscope, and a fiber length is measured using an image analyzer, and fiber lengths are measured in an order from a longest fiber length, and an average value of 100 pieces of the filler is defined as the number average fiber length,
(procedure B)
using a scanning electron microscope, one hundred cross-sections of a fibrous filler are measured from cross-sections of the epoxy resin composition particles, and an average of minimum diameters of fiber cross-sections is determined as a number average fiber diameter.

[5] The epoxy resin composition particle according to any one of [1] to [4],
in which the fibrous or acicular filler includes one or two or more selected from the group consisting of a wollastonite fiber, a glass fiber, a metal fiber, a carbon fiber, fibrous aluminum oxide, an aramid fiber, a silicon carbide whisker, a silicon nitride whisker, and a potassium titanate whisker.
[6] The epoxy resin composition particle according to any one of [1] to [5],

in which a spiral flow measured by the following procedure ii is equal to or more than 30 cm,
(procedure ii)

using a low-pressure transfer molding machine, the epoxy resin composition particles are injected into a mold for spiral flow measurement according to EMMI-1-66 under conditions of a mold temperature of 175°C, an injection pressure of 6.9 MPa, and a curing time of 120 seconds, and a flow length (cm) is measured.

[7] The epoxy resin composition particle according to any one of [1] to [6],
in which a content of the fibrous or acicular filler is equal to or more than 5% by mass and equal to or less than 80% by mass in 100% by mass of the epoxy resin composition particles.
[8] The epoxy resin composition particle according to any one of [1] to [7],
in which the epoxy resin includes a cresol novolac type epoxy resin and/or a bisphenol A type epoxy resin.
[9] The epoxy resin composition particle according to any one of [1] to [8],
in which the epoxy resin composition particle contains one or two or more curing catalysts selected from the group consisting of an imidazole-based catalyst and a phosphorus-based catalyst.
[10] The epoxy resin composition particle according to any one of [1] to [9],
in which the epoxy resin composition particle is used for being molded into a tablet through a step of supplying the epoxy resin composition particles into a heated extruder and kneading the epoxy resin composition particles while melting the particles to obtain an epoxy resin molding material; and a step of cutting the epoxy resin molding material while continuously extruding the molten epoxy resin molding material through an opening part at an extruder tip, to obtain the tablet.
[11] The epoxy resin composition particle according to any one of [1] to [10], which is intended for injection molding, in which, in injection molding that uses an injection molding apparatus including an injection unit consisting of a cylinder and a screw inserted into the cylinder, and a mold connected to the injection unit and having a cavity, the epoxy resin composition particles are charged into the cylinder and used.
[12] The epoxy resin composition particle according to any one of [1] to [11],
in which the epoxy resin composition particle contains an epoxy resin having a softening point of lower than 110°C, or a curing agent.
[13] A tablet formed using the epoxy resin composition particles according to any one of [1] to [12],
the tablet having a volume of equal to or more than 5 $cm^3$ and equal to or less than 1500 $cm^3$.
[14] A method for producing a columnar tablet, the method including:

a step of preparing the epoxy resin composition particles according to any one of [1] to [12];
a step of supplying the epoxy resin composition particles into a heated extruder and kneading the epoxy resin composition particles while melting the particles, to obtain an epoxy resin molding material; and
a step of cutting the epoxy resin molding material while continuously extruding the molten epoxy resin molding material through an opening part at an extruder tip, to obtain a columnar tablet,
in which a cross-sectional area of the columnar tablet is equal to or more than 3 $cm^2$ and equal to or less than 100 $cm^2$.

[15] A structure formed using the epoxy resin composition particles according to any one of [1] to [12].
[16] A method for producing the structure according to [15], using an injection molding apparatus including an injection unit consisting of a cylinder and a screw inserted into the cylinder, and a mold connected to the injection unit and having a cavity, the method including:

a step of melting the epoxy resin composition particles in the cylinder to obtain a molten resin composition; and
a step of injecting the molten resin composition through a screw tip to fill the cavity with the molten resin composition.

[17] The method for producing a structure according to [16],
in which in the step of filling, a temperature T at the screw tip is 60°C to 100°C.
[18] The method for producing a structure according to [16] or [17],
in which in the step of filling, a temperature inside the cavity is 150°C to 180°C.

ADVANTAGEOUS EFFECTS OF INVENTION

According to the present invention, there are provided epoxy resin composition particles that can be molded into a molded body having an excellent flexural modulus, or epoxy resin composition particles excellent in suppressing a gap when used to fill in a skew structure.

BRIEF DESCRIPTION OF THE DRAWINGS

[FIG. 1] A vertical cross-sectional view of an extruder according to an example of the present embodiment.
[FIG. 2] A schematic cross-sectional view illustrating an example of an injection molding apparatus according to the present embodiment.
[FIG. 3] A cross-sectional view illustrating an outline of a tensile compression tester.

DESCRIPTION OF EMBODIMENTS

Hereinafter, embodiments of the present invention will be described with reference to the drawings. In all the drawings, similar constituent elements will be assigned with similar reference numerals, and description thereof will not be repeated. Moreover, the diagrams are schematic diagrams and do not match the actual dimensional ratios.

<First Embodiment>

The epoxy resin composition particles of the present embodiment are a particulate epoxy resin composition containing an epoxy resin and a fibrous or acicular filler.
Such epoxy resin composition particles are used for any of magnet fixing, electronic control unit (ECU) encapsulation, coil encapsulation, or stator core encapsulation. Specifically, a tablet-shaped molding material is produced from the epoxy resin composition particles, and the obtained tablet-shaped molding material can be utilized for magnet fixing, electronic control unit (ECU) encapsulation, coil encapsulation, or stator core encapsulation by a known molding method.
The mechanical characteristics such as flexural modulus of an obtained molded body can be improved by the epoxy resin composition particles of the present embodiment. That is, since the toughness of the molded body is easily improved as the fibrous or acicular filler is entangled with each other, elasticity suitable for magnet fixing, electronic control unit (ECU) encapsulation, coil encapsulation, or stator core encapsulation is likely to be obtained.

<Second Embodiment>

The epoxy resin composition particles of the present embodiment contain an epoxy resin and a fibrous or acicular filler, and satisfies the requirement that the fracture toughness value (K1c) measured by the following procedure i is equal to or more than 3.0 $MPa \cdot m^{1/2}$.
By setting the fracture toughness value (K1c) of the epoxy resin composition particles to be equal to or greater than the above-described lower limit value, the generation of a gap in a case where a rotor core having a skew structure is filled with a material for magnet fixing that uses the epoxy resin composition particles can be suppressed. The details of such a reason are not clear; however, it is believed that the degree of progress of cracking can be highly controlled by the fracture toughness value. Thus, even when cracks are generated in a case where a rotor core having a skew structure is filled with the epoxy resin composition particles, since the progress of cracking can be appropriately controlled by the fracture toughness value, it is believed that the generation of a gap can be suppressed.
The upper limit value of the above-described fracture toughness value (K1c) is not particularly limited and may be, for example, equal to or less than 10.0 $MPa \cdot m^{1/2}$

(Measurement Procedure i for Fracture Toughness Value)

Using a transfer molding machine, a molded body is molded from the epoxy resin composition particles under molding conditions of a mold temperature of 175°C, an injection pressure of 9.8 MPa, and a curing time of 120 seconds.
According to a KIc method standardized in ASTM D5045-14, the obtained molded body is adjusted to a size of a length of 50 mm, a width B of 5 mm, and a thickness W of 10 mm, a notch having a depth of 3.5 mm in a thickness direction is formed in a central part in a length direction, and the obtained molded body is cured at 175°C for 4 hours to obtain a cured product, a scratch having a depth of 0.1 mm in the thickness direction is made with a razor on a notch tip portion of the cured product, and a test piece having a total crack length a = 3.6 mm is produced.
Subsequently, the obtained test piece is subjected to a three-point bending test using a tensile compression tester at a measurement temperature of 25°C, a speed of 10 mm/min, and a distance S between fulcrums of 40 mm, and a fracture toughness value (K1c ($MPa \cdot m^{1/2}$)) is calculated based on the following expression, and in the following expression, $P_Q$ is a maximum load (N).

$$KI_C = ((P_Q \times S)/(B \times W^{3/2})) \times f(a/W)$$

Provided that $f(a/W) = (3(a/W)^{1/2}[1.99 - (a/W)(1 - a/W)\{2.15 - 3.9(a/W) + 2.7(a/W)^2\}])/(2\{1 + 2(a/W)\}\{1 - (a/W)\}^{3/2})$.

In the present embodiment, the fracture toughness value can be controlled by, for example, appropriately selecting the type and the blending amount of each component contained in the epoxy resin composition particles, the method for preparing the epoxy resin composition particles, and the like. Among these, for example, increasing the kneading property of the material, increasing the fiber length of the fiber filler, and the like may be mentioned as elements for setting the above-described fracture toughness value to a desired numerical value range.

Hereinafter, the configurations, actions, and the like common to the epoxy resin composition particles of the first embodiment and the second embodiment will be described.

[Form of Epoxy Resin Composition Particles]

The epoxy resin composition particles of the present embodiment can be suitably used for producing a tablet-shaped, preferably columnar tablet-shaped epoxy resin molding material. It is possible to stably produce a tablet-shaped epoxy resin molding material using the epoxy resin composition particles.

The method for producing a tablet-shaped epoxy resin molding material may include, for example, as an extrusion molding method, a step of supplying epoxy resin composition particles into a heated extruder and kneading the epoxy resin composition particles while melting the particles to obtain an epoxy resin molding material; and a step of cutting the epoxy resin molding material while continuously extruding the molten epoxy resin molding material through an opening part at the extruder tip, to obtain a tablet.

In the method for producing the above-described tablet-shaped epoxy resin molding material, as a specific example, an extruder as shown in Fig. 1 can be used. Fig. 1 is a vertical cross-sectional view of an example of the configuration of an extruder.

The extruder has a hopper 2 into which the epoxy resin composition particles 1 are charged; a heater 41 for heating the epoxy resin composition particles 1 through a cylinder 43; a screw 42; and a die 5 that is attached to the extruder tip, has an opening having the same shape as a predetermined tablet cross-section, and is temperature-controlled. A temperature regulator 51 for controlling the temperature of the die 5 may be connected to the extruder.

In the extruder, the epoxy resin composition particles 1 are extruded into the cylinder 43 and the cylinder 43a on the input side and kneaded by the screw 42, while an epoxy resin molding material obtained by melting of the epoxy resin composition particles 1 by heating is extruded. Then, the extruder continuously extrudes the melt-kneaded epoxy resin molding material through the opening part of the die 5. The extruded epoxy resin molding material is an extruded material 6. The extruded material 6 is cut into a predetermined tablet length using a cutter (not shown) or the like, and thereby a tablet-shaped epoxy resin molding material (tablet) is obtained.

The particles of the epoxy resin composition particles 1 include powder and/or granules. For example, relatively fine particles (powder) are obtained by subjecting relatively coarse particles (granules) to a pulverization treatment and/or a classification treatment.

The particle shape of the epoxy resin composition particles 1 is not particularly limited, and may be a spherical shape, a polygonal shape, an irregular shape, or the like. These may be used singly, or two or more kinds thereof may be used in combination.

In the present embodiment, the opening shape of the die 5 attached to the extruder tip is an opening shape identical with the cross-sectional shape of the tablet-shaped epoxy resin molding material (tablet). Furthermore, when the opening shape is a circular shape, the dimension of the opening shape is, for example, equal to or more than 20 mm and equal to or less than 200 mm, and preferably equal to or more than 40 mm and equal to or less than 120 mm, in diameter. The opening shape, including its dimensions, is appropriately selected in accordance with the desired tablet shape.

Furthermore, the extruded material 6 extruded from the extruder is cut into a desired length with a cutter. This length is, for example, equal to or more than 10 mm and equal to or less than 300 mm, and preferably equal to or more than 20 mm and equal to or less than 200 mm.

The volume of the tablet (tablet-shaped epoxy resin molding material) is, for example, equal to or more than 5 $cm^3$ and equal to or less than 1500 $cm^3$, and preferably equal to or more than 10 $cm^3$ and equal to or less than 1000 $cm^3$.

The cross-sectional area of the columnar tablet is, for example, equal to or more than 3 $cm^2$ and equal to or less than 100 $cm^2$, and preferably equal to or more than 10 $cm^2$ and equal to or less than 95 $cm^2$.

Since the tablet-shaped epoxy resin molding material can be continuously obtained by using the epoxy resin composition particles of the present embodiment, it is possible to efficiently produce a tablet-shaped epoxy resin molding material having a high tablet height.

It is noted that the method for producing a tablet using the epoxy resin composition particles of the present embodiment is not limited to the above-described extrusion molding method, and a compression molding method, a transfer molding method, an injection molding method, or the like may be used.

[Physical Properties of Epoxy Resin Composition Particles]

The lower limit of the spiral flow of the epoxy resin composition particles is, for example, equal to or more than 30 cm, and preferably equal to or more than 50 cm.
On the other hand, the upper limit of the spiral flow of the epoxy resin composition particles is, for example, equal to or less than 250 cm, and preferably equal to or less than 200 cm.
The spiral flow can be measured according to the following procedure ii.

(Procedure ii)

Using a low-pressure transfer molding machine, the epoxy resin composition particles are injected into a mold for spiral flow measurement according to EMMI-1-66 under conditions of a mold temperature of 175°C, an injection pressure of 6.9 MPa, and a curing time of 120 seconds, and the flow length (cm) is measured.

[Use Applications and Method of Use]

Various structural bodies can be produced by using a tablet-shaped epoxy resin molding material and using a known molding method such as transfer molding or injection molding.
Above all, it is suitable that the epoxy resin composition particles of the present embodiment are used for injection molding. Specifically, it is preferable that the epoxy resin composition particles are intended for injection molding and are used in injection molding that uses an injection molding apparatus including an injection unit consisting of a cylinder and a screw inserted into the cylinder, and a mold connected to the injection unit and having a cavity, in which the epoxy resin composition particles are charged into the cylinder and used.
For example, in a case where a magnet fixing structure is produced using the epoxy resin composition particles of the present embodiment, the epoxy resin composition particles may be charged into an injection molding machine and melted by a cylinder, and the molten resin may be directly filled between the hole part in the mold and the permanent magnet.

[Structure]

The structure of the present embodiment is formed using the above-described epoxy resin composition particles. Specifically, the structure may be any fixing structure or encapsulation structure selected from the group consisting of a magnet fixing structure, an electronic control unit encapsulation structure, a coil encapsulation structure, a stator core encapsulation structure, and the like.
Regarding the above-described fixing structure or encapsulation structure, for example, WO 2012/029278 and the like may be referred to for a rotor core to which a magnet is fixed, for example, WO 2016/139985 and the like may be referred to for an electronic control unit for in-vehicle use, and Japanese Unexamined Patent Publication No. 2020-094092 and the like may be referred to for a stator core.
A case in which the epoxy resin molding material is used for the above-described magnet fixing structure will be described.
A rotor core includes a plurality of hole parts and permanent magnets individually inserted into the plurality of hole parts. By filling the epoxy resin molding material in between this hole part and the permanent magnet, the permanent magnet can be fixed to the rotor core.
A case in which the epoxy resin molding material is used for an in-vehicle electronic control unit encapsulation structure will be described.
An in-vehicle electronic control unit includes a substrate on which electronic components and the like are mounted. In the in-vehicle electronic control unit, at least a portion of the substrate together with the electronic components can be encapsulated with the epoxy resin molding material.
A case in which the epoxy resin molding material is used for a coil encapsulation structure will be described.
A coil includes a wound wire such as a copper wire, and is used for a motor, a transformer, and the like. This coil is molded (encapsulated) with the epoxy resin molding material due to insulation properties.
A case in which the epoxy resin molding material is used for a stator core encapsulation structure will be described.
A stator core includes a plurality of tooth parts and coils (wound wires) individually wound around the plurality of tooth parts.
By encapsulating the coil wound around this tooth part using the epoxy resin molding material, the coil and the stator core can be insulated. Furthermore, in a case where the tooth part formed in the stator core has an accommodation part, the coil and the stator core can be insulated by accommodating the coil wound around the tooth part in the

accommodation part, and filling the space between the coil and the accommodation part with the epoxy resin molding material.

Furthermore, as an example of production, an insulating layer is formed on the surface of the stator core using the epoxy resin molding material. Thereafter, a method of inserting a coil into the tooth part and encapsulating this coil using the epoxy resin molding material, can be used.

The wound wire that can be used for the above-described coil or stator core, may be made of a round wire or a rectangular wire.

The step of producing a fixing structure or a encapsulation structure may be carried out, for example, using a tablet-shaped epoxy resin molding material at a temperature of equal to or higher than 120°C and equal to or lower than 200°C and a pressure of equal to or higher than 3 MPa and equal to or lower than 15 MPa, and preferably at a temperature of 140°C to 180°C and a pressure of 5 to 12 MPa.

[Method for Producing Structure]

Hereinafter, an example of the method for producing a structure will be described in detail. Hereinafter, the description will be made using Fig. 2.

In Fig. 2, regarding an injection molding apparatus 1, an injection molding apparatus 1 including an injection unit 20 consisting of a cylinder 21 and a screw 22 inserted into the cylinder 21, and a mold 10 having a cavity 12 is shown.

The injection molding apparatus 1 includes the mold 10 including a molding space (cavity 12) such as a gate, a runner, and a gate, and an injection molding machine 20 for performing injection molding. The injection molding machine 20 includes, for example, a cylinder 21, a screw 22 that can rotate inside the cylinder 21, a hopper 23 that can charge the epoxy resin composition particles into the cylinder 21, a heater 24 that melts and heats the epoxy resin composition particles through the cylinder 21, and a nozzle 25 that sends out the melt-kneaded epoxy resin composition particles in the cylinder 21 to the mold 10.

Furthermore, Fig. 2 shows a screw 22 including a check valve 26 at the tip; however, the screw 22 is not limited thereto. The screw 22 does not have to include the check valve 26.

The method for producing a structure includes: a step of melting the epoxy resin composition particles in the cylinder 21 and obtaining a molten resin composition; and a step of injecting the molten resin composition through the tip of the screw 22 to fill the cavity 12.

That is, first, the epoxy resin composition particles are charged into the injection molding machine 20 that is being heated. As a result, the epoxy resin composition particles are kneaded by the screw 22 while being heated and melted by the heater 24 in the cylinder 21. The temperature at the tip of the screw 22 in the cylinder 21 is preferably 60°C to 100°C from the viewpoint of satisfactorily heating and melting the epoxy resin composition particles, and the like.

Next, the molten resin composition melted by the screw 22 is sent while being compression-kneaded in the direction of the nozzle 25, and at the same time, the screw 22 is lowered backward (in a direction opposite to the nozzle 25). In this case, a back pressure for pushing the screw 22 from the rear can be applied, and pressure can be applied to the molten resin composition collected in the nozzle 25. Then, the molten resin composition collected in the nozzle 25 at the tip of the screw 22 is weighed to a set position.

Then, the weighed molten resin composition is injected into the cavity 12 of the mold 10 through the nozzle 25 by the pressure of the screw 22, by moving forward the screw 22 that has been lowered backward. The temperature in the cavity 12 when filled with the molten resin composition is preferably 150°C to 180°C, from the viewpoint of appropriately filling the cavity 12 with the molten resin composition, or the like.

Next, the molten resin composition is cured in the cavity 12, subsequently the mold 10 is opened, and the structure is taken out from the cavity 12.

For example, in a case where a magnet fixing structure is produced using the epoxy resin composition particles of the present embodiment, the epoxy resin composition particles may be charged into an injection molding machine and melted by the cylinder 21, and the molten resin may be directly filled between the hole part in the mold 10 and the permanent magnet.

Hereinafter, each component of the epoxy resin composition particles of the present embodiment will be described in detail.

[Epoxy Resin]

The epoxy resin composition particles contain an epoxy resin.

Examples of the epoxy resin include phenol resins, including novolac type phenol resins such as a phenol novolac resin, a cresol novolac resin, and a bisphenol A novolac resin, and resol type phenol resins; epoxy resins, including novolac type epoxy resins such as a phenol novolac type epoxy resin and a cresol novolac type epoxy resin, bisphenol type epoxy resins such as a bisphenol A type epoxy resin and a bisphenol F type epoxy resin, aromatic glycidyl amine type

epoxy resins such as N,N-diglycidyl aniline, N,N-diglycidyl toluidine, diaminodiphenylmethane type glycidyl amine, and aminophenol type glycidyl amine, hydroquinone type epoxy resins, biphenyl type epoxy resins, stilbene type epoxy resins, triphenolmethane type epoxy resins, triphenolpropane type epoxy resins, alkyl-modified triphenolmethane type epoxy resins, triazine nucleus-containing epoxy resins, dicyclopentadiene-modified phenol type epoxy resins, naphthol type epoxy resins, naphthalene type epoxy resins, and aralkyl type epoxy resins such as a phenol aralkyl type epoxy resin having a phenylene and/or biphenylene skeleton and a naphthol aralkyl type epoxy resin having a phenylene and/or biphenylene skeleton; and aliphatic epoxy resins, including alicyclic epoxies such as vinyl cyclohexene dioxide, dicyclopentadiene oxide, and alicyclic diepoxy-adipade. These may be used singly or as mixtures of two or more kinds thereof.

Among these, it is preferable that the epoxy resin includes a cresol novolac type epoxy resin and/or a bisphenol A type epoxy resin.

Furthermore, it is preferable that the epoxy resin has a softening point of lower than 80°C.

The softening point is measured by a ball and ring method.

The content of the epoxy resin is preferably equal to or more than 5% by mass and equal to or less than 40% by mass, and more preferably equal to or more than 10% by mass and equal to or less than 20% by mass, with respect to the total amount of the epoxy resin composition particles.

[Curing Agent]

The epoxy resin composition particles may contain a curing agent for curing an epoxy resin.

As the curing agent, for example, a phenol resin-based curing agent is preferably used. Examples of the phenol resin-based curing agent include novolac type resins such as a phenol novolac resin, a cresol novolac resin, and a naphthol novolac resin; polyfunctional phenol resins such as a triphenolmethane type phenol resin; modified phenol resins such as a terpene-modified phenol resin and a dicyclopentadiene-modified phenol resin; aralkyl type resins such as a phenol aralkyl resin having a phenylene skeleton and/or a biphenylene skeleton and a naphthol aralkyl resin having a phenylene and/or biphenylene skeleton; and bisphenol compounds such as bisphenol A and bisphenol F. Regarding these, one kind thereof may be used alone, or two or more kinds thereof may be used in combination. With such a phenol resin-based curing agent, the balance between flame resistance, moisture resistance, electrical characteristics, curability, storage stability, and the like is improved.

In addition, examples of the curing agent that can be used in combination include a polyaddition type curing agent and a condensation type curing agent.

Examples of the polyaddition type curing agent include polyamine compounds, including aliphatic polyamines such as diethylenetriamine (DETA), triethylenetetramine (TETA) and methaxylenediamine (MXDA), aromatic polyamines such as diaminodiphenylmethane (DDM), m-phenylenediamine (MPDA), and diaminodiphenylsulfone (DDS), dicyandiamide (DICY), and an organic acid dihydrazide; acid anhydrides, including alicyclic acid anhydrides such as hexahydrophthalic anhydride (HHPA) and methyltetrahydrophthalic anhydride (MTHPA), and aromatic acid anhydrides such as trimellitic anhydride (TMA), pyromellitic anhydride (PMDA), and benzophenonetetracarboxylic acid (BTDA); polyphenol compounds such as a novolac type phenol resin and a phenol polymer; polymercaptan compounds such as a polysulfide, a thioester, and a thioether; isocyanate compounds such as an isocyanate prepolymer and a blocked isocyanate; and organic acids such as a carboxylic acid-containing polyester resin.

Examples of the condensation type curing agent include a resol resin, a urea resin such as a methylol group-containing urea resin; and a melamine resin such as a methylol group-containing melamine resin.

Furthermore, the softening point of the curing agent is preferably lower than 110°C, and more preferably lower than 105°C.

The softening point is measured by a ball and ring method.

Incidentally, it is preferable that the phenol resin as a curing agent and the epoxy resin are blended such that the equivalent ratio (EP)/(OH) between the number of epoxy groups (EP) in the epoxy resin composition particles and the number of phenolic hydroxyl groups (OH) of all the phenol resins is equal to or more than 0.8 and equal to or less than 1.3. When the equivalent ratio is within the above-described range, sufficient curing characteristics can be obtained when molding the obtained epoxy resin composition particles. However, when a resin other than a phenol resin, which can react with the epoxy resin, is used in combination, the equivalent ratio may be adjusted as appropriate.

[Inorganic Filler]

(Fibrous or Acicular Filler)

The epoxy resin composition particles contain a fibrous or acicular filler as an inorganic filler.

The lower limit of the number average fiber length of the fibrous or acicular filler is, for example, equal to or more

than 5 μm, preferably equal to or more than 10 μm, more preferably equal to or more than 30 μm, and even more preferably equal to or more than 50 μm. In this manner, the strength of the material can be improved.

On the other hand, the upper limit of the number average fiber length of the fibrous or acicular filler is, for example, equal to or less than 500 μm, preferably equal to or less than 450 μm, and more preferably equal to or less than 400 μm. In this manner, the moldability of the material can be improved.

When the number average fiber length of the fibrous or acicular filler is denoted by L, and the number average fiber diameter of the fibrous or acicular filler is denoted by D, the aspect ratio is defined as L/D.

The lower limit of the L/D of the fibrous or acicular filler is, for example, equal to or more than 3, preferably equal to or more than 10, and more preferably equal to or more than 15. In this manner, the flexural modulus can be further improved. Furthermore, the toughness can be improved.

On the other hand, the upper limit of L/D of the fibrous or acicular filler is, for example, equal to or less than 100, preferably equal to or less than 70, and more preferably equal to or less than 50. In this manner, the moldability of the material can be improved.

(Measurement Procedure A for Number Average Fiber Length)

The epoxy resin composition particles are dissolved in acetone to remove the resin component, the insoluble components are dispersed on a glass plate, an image of the filler in the insoluble components is captured using an optical microscope, and the fiber length is measured using an image analyzer. The average value of the fiber lengths of 100 pieces of the filler, starting from the longest fiber length, is defined as the above-described number average fiber length.

(Measurement Procedure B of Number Average Fiber Diameter)

Using a scanning electron microscope, one hundred cross-sections of the fibrous filler are measured from cross-sections of the epoxy resin composition particles, and the average of the minimum diameters of the fiber cross-sections is determined as the number average fiber diameter.

The fibrous or acicular filler may include, for example, one or two or more selected from the group consisting of a wollastonite fiber, a glass fiber, a metal fiber, a carbon fiber, a fibrous aluminum oxide, an aramid fiber, a silicon carbide whisker, a silicon nitride whisker, and a potassium titanate whisker. Among these, it is preferable that the fibrous or acicular filler includes at least one of a wollastonite fiber and a glass fiber, and more preferably a wollastonite fiber.

The lower limit of the content of the fibrous or acicular filler is, for example, equal to or more than 5% by mass, preferably equal to or more than 10% by mass, and more preferably equal to or more than 30% by mass, in 100% by mass of the epoxy resin composition particles. In this manner, the flexural modulus can be further improved. Furthermore, the toughness can be improved.

On the other hand, the upper limit of the content of the fibrous or acicular filler may be, without being particularly limited, equal to or less than 80% by mass, and preferably equal to or less than 75% by mass, in 100% by mass of the epoxy resin composition particles.

Furthermore, the lower limit of the content of the fibrous or acicular filler in all the inorganic fillers is, for example, equal to or more than 30% by mass, preferably equal to or more than 40% by mass, more preferably equal to or more than 50% by mass, and even more preferably equal to or more than 72% by mass. In this manner, the flexural modulus can be further improved. Furthermore, the toughness can be improved.

On the other hand, the upper limit of the content of the fibrous or acicular filler in all the inorganic fillers is not particularly limited, but may be equal to or less than 100% by mass.

(Inorganic Filler Other Than Fibrous or Acicular Filler)

The epoxy resin composition particles may contain an inorganic filler other than the fibrous or acicular filler.

The other inorganic filler is not particularly limited as long as it has a shape such as a spherical shape, a polygonal shape, or an irregular shape. Specifically, as the other inorganic filler, one having an aspect ratio of equal to or less than 2 is preferred, and a spherical one is more preferred.

Examples of the other inorganic filler include silica, alumina, kaolin, talc, clay, mica, rock wool, glass powder, glass flakes, glass beads, silicon carbide, silicon nitride, aluminum nitride, carbon black, graphite, titanium dioxide, calcium carbonate, calcium sulfate, barium carbonate, magnesium carbonate, magnesium sulfate, and barium sulfate. These may be used singly, or two or more kinds thereof may be used in combination.

As the silica, fused silica such as fused crushed silica and fused spherical silica, crystalline silica, and the like are used.

The average particle size $D_{50}$ of the inorganic filler is preferably equal to or more than 0.01 μm and equal to or less than 75 μm, and more preferably equal to or more than 0.05 μm and equal to or less than 50 μm. By setting the average

particle size of the inorganic filler to be within the above-described range, the filling property in the mold is improved. Furthermore, by setting the upper limit value of the average particle size of the inorganic filler to be equal to or less than 75 μm, the filling property is further improved. The average particle size $D_{50}$ was defined as the volume-equivalent average particle size given by a laser diffraction type measuring apparatus, RODOS SR type (SYMPATEC HEROS & RODOS).

The content of the inorganic filler is preferably equal to or more than 50% by mass, more preferably equal to or more than 60% by mass, even more preferably equal to or more than 65% by mass, and particularly preferably equal to or more than 75% by mass, with respect to the total amount of the epoxy resin composition particles.

On the other hand, the content of the inorganic filler is preferably equal to or less than 93% by mass, more preferably equal to or less than 91% by mass, and even more preferably equal to or less than 90% by mass, with respect to the total amount of the epoxy resin composition particles.

Furthermore, when the inorganic filler is used in combination with an inorganic flame retardant, such as a metal hydroxide such as aluminum hydroxide or magnesium hydroxide, zinc borate, zinc molybdate, or antimony trioxide as described above, it is desirable that the total amount of these inorganic flame retardants and the above-described inorganic filler is set to be within the range of the above-described content of the inorganic filler.

[Curing Catalyst]

The epoxy resin composition particles may contain a curing catalyst, as necessary.

As the curing catalyst, it is preferable to use one or two or more selected from the group consisting of an imidazole-based catalyst and a phosphorus-based catalyst.

As the imidazole-based catalyst, for example, it is preferable to use imidazoles. Examples of the imidazoles can include one kind or two or more kinds selected from imidazole compounds such as imidazole, 2-methylimidazole, 2-undecylimidazole, 2-heptadecylimidazole, 1,2-dimethylimidazole, 2-ethyl-4-methylimidazole, 2-phenylimidazole, 2-phenyl-4-methylimidazole, 1-benzyl-2-phenylimidazole, 1-benzyl-2-methylimidazole, 1-cyanoethyl-2-methylimidazole, 1-cyanoethyl-2-ethyl-4-methylimidazole, 1-cyanoethyl-2-undecylimidazole, 1-cyanoethyl-2-phenylimidazole, 2-phenyl-4,5-dihydroxyimidazole, 2-phenyl-4,5-dihydroxydimethylimidazole, and 2-phenyl-4-methyl-5-hydroxymethylimidazole; 1-cyanoethyl-2-undecylimidazolium trimellitate, 1-cyanoethyl-2-phenylimidazolium trimellitate, 2,4-diamino-6-[2'-methylimidazolyl(1')]-ethyl-s-triazine, 2,4-diamino-6-[2'-undecylimidazolyl(1')]-ethyl-s-triazine,2,4-diamino-6-[2'-ethyl-4-methylimidazolyl(1')]-ethyl-s-triazine, isocyanuric acid adduct of 2,4-diamino-6-[2'-methylimidazolyl(1')]-ethyl-s-triazine, isocyanuric acid adduct of 2-phenylimidazole, and isocyanuric acid adduct of 2-methylimidazole.

In a case where the curing catalyst includes an imidazole-based catalyst, the lower limit of the content of the imidazole-based catalyst is preferably equal to or more than 0.01% by mass, more preferably equal to or more than 0.03% by mass, and particularly preferably equal to or more than 0.05% by mass, with respect to the total amount of the epoxy resin composition particles.

In addition, the upper limit of the content of the imidazole-based catalyst is preferably equal to or less than 2.0% by mass, more preferably equal to or less than 1.0% by mass, and particularly preferably equal to or less than 0.5% by mass, with respect to the total amount of the epoxy resin composition particles.

Examples of the phosphorus-based catalyst include phosphorus atom-containing compounds such as an organic phosphine, a tetra-substituted phosphonium compound, a phosphobetaine compound, an adduct of a phosphine compound and a quinone compound, and an adduct of a phosphonium compound and a silane compound.

Examples of the organic phosphine that can be used for the epoxy resin composition particles include primary phosphines such as ethylphosphine and phenylphosphine; secondary phosphines such as dimethylphosphine and diphenylphosphine; and tertiary phosphines such as trimethylphosphine, triethylphosphine, tributylphosphine, and triphenylphosphine.

Examples of the tetra-substituted phosphonium compound that can be used for the epoxy resin composition particles include a compound represented by the following General Formula (4).

[Chemical Formula 1]

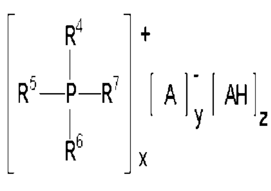

(4)

(In the above-described General Formula (4), P represents a phosphorus atom. $R^4$, $R^5$, $R^6$, and $R^7$ each represent an

aromatic group or an alkyl group. A represents an anion of an aromatic organic acid having at least one group of any one functional group selected from a hydroxyl group, a carboxyl group, and a thiol group in the aromatic ring. AH represents an aromatic organic acid having at least one group of any one functional group selected from a hydroxyl group, a carboxyl group, and a thiol group in the aromatic ring. x and y are each a number of 1 to 3, z is a number of 0 to 3, and x = y.)

The compound represented by General Formula (4) is obtained, for example, as follows; however, the compound is not limited to this. First, a tetra-substituted phosphonium halide, an aromatic organic acid, and a base are mixed with an organic solvent, the mixture is uniformly mixed, and an aromatic organic acid anion is generated in the solution system. Next, when water is added thereto, a compound represented by General Formula (4) can be precipitated. With regard to the compound represented by General Formula (4), it is preferable that $R^4$, $R^5$, $R^6$, and $R^7$ bonded to the phosphorus atom are each a phenyl group; AH is a compound having a hydroxyl group in the aromatic ring, that is, a phenol; and A is an anion of the phenol. Examples of the phenol include monocyclic phenols such as phenol, cresol, resorcin, and catechol; condensed polycyclic phenols such as naphthol, dihydroxynaphthalene, and anthraquinol; bisphenols such as bisphenol A, bisphenol F, and bisphenol S; and polycyclic phenols such as phenylphenol and biphenol.

Examples of the phosphobetaine compound used as the curing catalyst include a compound represented by the following General Formula (5).

[Chemical Formula 2]

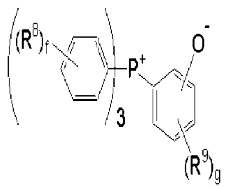

(5)

(In the above-described General Formula (5), $R^8$ represents an alkyl group having 1 to 3 carbon atoms, and $R^9$ represents a hydroxyl group. f is a number of 0 to 5, and g is a number of 0 to 3.)

The compound represented by General Formula (5) is obtained, for example, as follows. The compound is obtained through a step of first bringing a triaromatic-substituted phosphine, which is a tertiary phosphine, into contact with a diazonium salt and substituting the triaromatic-substituted phosphine with a diazonium group of the diazonium salt. However, the compound is not limited to this.

Examples of the adduct of a phosphine compound and a quinone compound, which is used as the curing catalyst, include a compound represented by the following General Formula (6).

[Chemical Formula 3]

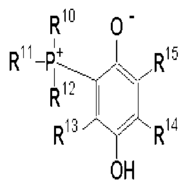

(6)

(In the above-described General Formula (6), P represents a phosphorus atom. $R^{10}$, $R^{11}$, and $R^{12}$ each represent an alkyl group having 1 to 12 carbon atoms or an aryl group having 6 to 12 carbon atoms, and they may be identical with or different from each other. $R^{13}$, $R^{14}$, and $R^{15}$ each represent a hydrogen atom or a hydrocarbon group having 1 to 12 carbon atoms, they may be identical with or different from each other, or $R^{14}$ and $R^{15}$ may be bonded to form a cyclic structure.)

Regarding the phosphine compound that is used for the adduct of a phosphine compound and a quinone compound, for example, a compound in which the aromatic ring is unsubstituted or a substituent such as an alkyl group or an alkoxyl group is present in the aromatic ring, such as triphenylphosphine, a tris(alkylphenyl)phosphine, a tris(alkoxyphenyl)phosphine, trinaphthylphosphine, or tris(benzyl)phosphine, is preferred, and examples of the substituent such as an alkyl group or an alkoxyl group include those having 1 to 6 carbon atoms. Triphenylphosphine is preferred from the viewpoint of easy availability.

Furthermore, examples of the quinone compound that is used for the adduct of a phosphine compound and a quinone compound include benzoquinone and anthraquinones, and above all, p-benzoquinone is preferred from the viewpoint of storage stability.

Regarding a method for producing an adduct of a phosphine compound and a quinone compound, the adduct can be obtained by bringing an organic tertiary phosphine and a benzoquinone into contact with each other in a solvent in which both the compounds can be dissolved, and mixing the compounds. The solvent may be a solvent having low dissolvability for the adduct, among ketones such as acetone and methyl ethyl ketone. However, the compound is not limited to this.

With regard to the compound represented by General Formula (6), a compound in which $R^{10}$, $R^{11}$, and $R^{12}$ bonded to the phosphorus atom are each a phenyl group; and $R^{13}$, $R^{14}$, and $R^{15}$ are each a hydrogen atom, that is, a compound to which 1,4-benzoquinone and triphenylphosphine have been added, is preferable from the viewpoint of lowering the hot elastic modulus of a cured product of the epoxy resin composition particles.

Examples of the adduct of a phosphonium compound and a silane compound, which is used as the curing catalyst, include a compound represented by the following General Formula (7).

[Chemical Formula 4]

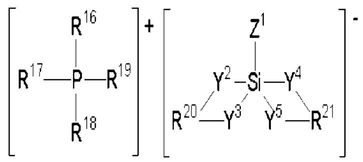

(7)

(In the above-described General Formula (7), P represents a phosphorus atom, and Si represents a silicon atom. $R^{16}$, $R^{17}$, $R^{18}$, and $R^{19}$ each represent an organic group having an aromatic ring or a heterocyclic ring, or an aliphatic group, and they may be identical with or different from each other. In the formula, $R^{20}$ is an organic group bonded to the groups $Y^2$ and $Y^3$. In the formula, $R^{21}$ is an organic group bonded to the groups $Y^4$ and $Y^5$. $Y^2$ and $Y^3$ each represent a group formed when a proton-donating group releases a proton, and the groups $Y^2$ and $Y^3$ in the same molecule are bonded to the silicon atom to form a chelate structure. $Y^4$ and $Y^5$ each represent a group formed when a proton-donating group releases a proton, and the groups $Y^4$ and $Y^5$ in the same molecule are bonded to the silicon atom to form a chelate structure. $R^{20}$ and $R^{21}$ may be identical with or different from each other, and $Y^2$, $Y^3$, $Y^4$, and $Y^5$ may be identical with or different from each other. $Z^1$ is an organic group having an aromatic ring or a heterocyclic ring, or an aliphatic group.)

In General Formula (7), examples of $R^{16}$, $R^{17}$, $R^{18}$, and $R^{19}$ include a phenyl group, a methylphenyl group, a methoxyphenyl group, a hydroxyphenyl group, a naphthyl group, a hydroxynaphthyl group, a benzyl group, a methyl group, an ethyl group, an n-butyl group, an n-octyl group, and a cyclohexyl group, and among these, an aromatic group having a substituent such as an alkyl group, an alkoxy group, or a hydroxyl group, or an unsubstituted aromatic group, such as a phenyl group, a methylphenyl group, a methoxyphenyl group, a hydroxyphenyl group, or a hydroxynaphthyl group, is more preferred.

Furthermore, in General Formula (7), $R^{20}$ is an organic group that is bonded to $Y^2$ and $Y^3$. Similarly, $R^{21}$ is an organic group that is bonded to the groups $Y^4$ and $Y^5$. $Y^2$ and $Y^3$ are each a group formed when a proton-donating group releases a proton, and the groups $Y^2$ and $Y^3$ in the same molecule are bonded to the silicon atom to form a chelate structure. Similarly, $Y^4$ and $Y^5$ are each a group formed when a proton-donating group releases a proton, and the groups $Y^4$ and $Y^5$ in the same molecule are bonded to the silicon atom to form a chelate structure. The groups $R^{20}$ and $R^{21}$ may be identical with or different from each other, and the groups $Y^2$, $Y^3$, $Y^4$, and $Y^5$ may be identical or different from each other. The groups represented by $-Y^2-R^{20}-y^3-$ and $-Y^4-R^{21}-Y^5-$ in such General Formula (7) are each composed of a group formed when a proton donor releases two protons, and the proton donor is preferably an organic acid having at least two carboxyl groups or hydroxyl groups in the molecule, more preferably an aromatic compound having at least two carboxyl groups or hydroxyl groups on adjoining carbon atoms that constitute the aromatic ring, and even more preferably an aromatic compound having at least two hydroxyl groups on adjoining carbon atoms that constitute the aromatic ring, and examples thereof include catechol, pyrogallol, 1,2-dihydroxynaphthalene, 2,3-dihydroxynaphthalene, 2,2'-biphenol, 1,1'-bi-2-naphthol, salicylic acid, 1-hydroxy-2-naphthoic acid, 3-hydroxy-2-naphthoic acid, chloranilic acid, tannic acid, 2-hydroxybenzyl alcohol, 1,2-cyclohexanediol, 1,2-propanediol, and glycerin, and among these, catechol, 1,2-dihydroxynaphthalene, and 2,3-dihydroxynaphthalene are more preferred.

Furthermore, $Z^1$ in General Formula (7) represents an organic group having an aromatic ring or a heterocyclic ring, or an aliphatic group, and specific examples thereof include aliphatic hydrocarbon groups such as a methyl group, an ethyl group, a propyl group, a butyl group, a hexyl group, and an octyl group; aromatic hydrocarbon groups such as a phenyl group, a benzyl group, a naphthyl group, and a biphenyl group; glycidyloxy groups such as a glycidyloxypropyl group, a mercaptopropyl group, and an aminopropyl group; and reactive substituents such as a mercapto group, an alkyl group having an amino group, and a vinyl group, while among these, a methyl group, an ethyl group, a phenyl group, a

naphthyl group, and a biphenyl group are more preferred from the viewpoint of thermal stability.

Regarding a method for producing an adduct of a phosphonium compound and a silane compound, a silane compound such as phenyltrimethoxysilane and a proton donor such as 2,3-dihydroxynaphthalene are introduced into a flask containing methanol and dissolved, and then a sodium methoxide-methanol solution is added dropwise thereto while being stirred at room temperature. When a solution prepared in advance, in which a tetra-substituted phosphonium halide such as tetraphenylphosphonium bromide is dissolved in methanol, is further added dropwise while being stirred at room temperature, crystals are precipitated. When the precipitated crystals are filtered, washed with water, and vacuum-dried, an adduct of a phosphonium compound and a silane compound is obtained. However, the method is not limited to this.

The content of the curing catalyst is preferably equal to or more than 0.05% by mass, more preferably equal to or more than 0.08% by mass, and particularly preferably equal to or more than 0.10% by mass, with respect to the total amount of the epoxy resin composition particles. By setting the content of the curing catalyst to be equal to or greater than the above-described lower limit value, the curability of the epoxy resin composition particles during transfer molding can be effectively improved. On the other hand, the content of the curing catalyst is preferably equal to or less than 2.0% by mass, more preferably equal to or less than 1.0% by mass, and particularly preferably equal to or less than 0.5% by mass, with respect to the total amount of the epoxy resin composition particles. By setting the content of the curing catalyst to be equal to or less than the above-described upper limit value, the fluidity at the time of encapsulation can be enhanced, which can contribute to an enhancement of the filling property.

[Wax]

The epoxy resin composition particles may contain a wax as a release agent, as necessary.

Examples of the wax include a natural wax such as carnauba wax, an ester wax, a montanic acid ester wax, a synthetic wax such as a polyethylene oxide wax, and a higher fatty acid such as zinc stearate and metal salts thereof.

The blending amount of the wax is, for example, equal to or more than 0.05% by mass and equal to or less than 2.0% by mass with respect to the total amount of the epoxy resin composition particles. The lower limit value of the blending amount of the wax is preferably equal to or more than 0.1% by mass, and more preferably equal to or more than 0.2% by mass, with respect to the total amount of the epoxy resin composition particles. The upper limit value of the blending amount of the wax is preferably equal to or less than 1.5% by mass, and more preferably equal to or less than 1.0% by mass, with respect to the total amount of the epoxy resin composition particles. When the wax is blended in the above-described range, the obtained epoxy resin composition particles have excellent fluidity and filling property during transfer molding.

[Coupling agent]

The epoxy resin composition particles may contain a coupling agent such as a silane coupling agent, as necessary.

Examples of the coupling agent include an epoxysilane, an aminosilane, a ureidosilane, and a mercaptosilane.

Examples of the epoxysilane include γ-glycidoxypropyltriethoxysilane, γ-glycidoxypropyltrimethoxysilane, γ-glycidoxypropylmethyldimethoxysilane, and β-(3,4-epoxycyclohexyl)ethyltrimethoxysilane. Examples of the aminosilane include γ-aminopropyltriethoxysilane, γ-aminopropyltrimethoxysilane, N-β-(aminoethyl)-γ-aminopropyltrimethoxysilane, N-β-(aminoethyl)-γ-aminopropylmethyldimethoxysilane, N-phenyl-γ-aminopropyltriethoxysilane, N-phenyl-y-aminopropyltrimethoxysilane, N-β-(aminoethyl)-γ-aminopropyltriethoxysilane, N-6-(aminohexyl)-3-aminopropyltrimethoxysilane, and N-(3-(trimethoxysilylpropyl)-1,3-benzenedimethanane. Examples of the ureidosilane include γ-ureidopropyltriethoxysilane and hexamethyldisilazane. A latent aminosilane coupling agent having the primary amino moiety of aminosilane protected by reacting the primary amino moiety with a ketone or an aldehyde may also be used. Furthermore, the aminosilane may have a secondary amino group. Examples of the mercaptosilane include γ-mercaptopropyltrimethoxysilane and 3-mercaptopropylmethyldimethoxysilane, as well as a silane coupling agent that exhibits a function similar to that of a mercaptosilane coupling agent by thermal decomposition, such as bis(3-triethoxysilylpropyl) tetrasulfide or bis(3-triethoxysilylpropyl) disulfide. Furthermore, regarding these silane coupling agents, products that have been subjected to a hydrolysis reaction in advance may be blended. Regarding these silane coupling agents, one kind thereof may be used alone, or two or more kinds thereof may be used in combination.

From the viewpoint of continuous moldability, a mercaptosilane is preferred; from the viewpoint of fluidity, an aminosilane is preferred; and from the viewpoint of adhesion, an epoxysilane is preferred.

The lower limit value of the content of the coupling agent such as a silane coupling agent that can be used for the epoxy resin composition particles is preferably equal to or more than 0.01% by mass, more preferably equal to or more than 0.05% by mass, and particularly preferably equal to or more than 0.1% by mass, with respect to the total amount of the epoxy resin composition particles. When the lower limit value of the content of the coupling agent such as a silane coupling agent is within the above-described range, the interface strength between the epoxy resin and the inorganic filler is not

decreased, and satisfactory vibration resistance can be obtained. The upper limit value of the content of the coupling agent such as a silane coupling agent is preferably equal to or less than 1% by mass, more preferably equal to or less than 0.8% by mass, and particularly preferably equal to or less than 0.6% by mass, with respect to the total amount of the epoxy resin composition particles. When the upper limit value of the content of the coupling agent such as a silane coupling agent is within the above-described range, the interface strength between the epoxy resin and the inorganic filler is not decreased, and satisfactory vibration resistance can be obtained. Furthermore, when the content of the coupling agent such as a silane coupling agent is within the above-described range, the water absorbency of the cured product of the epoxy resin composition particles is prevented from increasing.

[Other additives]

The epoxy resin composition particles of the present embodiment may further contain other additives such as a colorant, a flame retardant, and a low stress agent, as necessary, in addition to the above-described components. These may be used singly, or two or more kinds thereof may be used in combination.

Thus, the embodiments of the present invention have been described above; however, these are only examples of the present invention, and various configurations other than the above-described ones can be adopted. Furthermore, it should be noted that the present invention is not intended to be limited to the above-described embodiments, and modifications, ameliorations, and the like made to the extent that the object of the present invention can be achieved are included in the present invention.

Hereinafter, a first reference aspect of the present embodiment will be described.

1. An epoxy resin composition particle used for magnet fixing, including:

   an epoxy resin; and
   a fibrous or acicular filler,
   in which a fracture toughness value (K1c) measured by the following procedure is equal to or more than 3.0 MPa·m$^{1/2}$,
   (procedure)
   using a transfer molding machine, a molded body is molded from the epoxy resin composition particles under molding conditions of a mold temperature of 175°C, an injection pressure of 9.8 MPa, and a curing time of 120 seconds,
   according to a KIc method standardized in ASTM D5045-14, the obtained molded body is adjusted to a size of a length of 50 mm, a width B of 5 mm, and a thickness W of 10 mm, a notch having a depth of 3.5 mm in a thickness direction is formed in a central part in a length direction, and the obtained molded body is cured at 175°C for 4 hours to obtain a cured product, a scratch having a depth of 0.1 mm in the thickness direction is made with a razor on a notch tip portion of the cured product, and a test piece having a total crack length a = 3.6 mm is produced, subsequently, the obtained test piece is subjected to a three-point bending test using a tensile compression tester at a measurement temperature of 25°C, a speed of 10 mm/min, and a distance S between fulcrums of 40 mm, and a fracture toughness value (K1c (MPa·m$^{1/2}$)) is calculated based on the following expression, and in the following expression, $P_Q$ is a maximum load (N):

   $$KI_C = ((P_Q \times S)/(B \times W^{3/2})) \times f(a/W)$$

   provided that $f(a/W) = (3(a/W)^{1/2}[1.99 - (a/W)(1 - a/W)\{2.15 - 3.9(a/W) + 2.7(a/W)^2\}])/(2\{1 + 2(a/W)\}\{1 - (a/W)\}^{3/2})$.

2. The epoxy resin composition particle according to 1.,

   in which a number average fiber length of the fibrous or acicular filler, which is measured by the following procedure A, is equal to or more than 5 μm and equal to or less than 500 μm,
   (procedure A)
   the epoxy resin composition particles are dissolved in acetone to remove a resin component, subsequently insoluble components are dispersed on a glass plate, an image of the filler in the insoluble components is captured using an optical microscope, and a fiber length is measured using an image analyzer, and an average value of the fiber lengths of 100 pieces of the filler, starting from a longest fiber length, is defined as the number average fiber length.

3. The epoxy resin composition particle according to 1. or 2.,

in which when a number average fiber length of the fibrous or acicular filler measured by the following procedure A is denoted by L, and a number average fiber diameter of the fibrous or acicular filler measured by the following procedure B is denoted by D,
L/D is equal to or more than 3 and equal to or less than 100,
(procedure A)
the epoxy resin composition particles are dissolved in acetone to remove a resin component, subsequently insoluble components are dispersed on a glass plate, an image of the filler in the insoluble components is captured using an optical microscope, and a fiber length is measured using an image analyzer, and fiber lengths are measured in an order from a longest fiber length, and an average value of 100 pieces of the filler is defined as the number average fiber length,
(procedure B)
using a scanning electron microscope, one hundred cross-sections of a fibrous filler are measured from cross-sections of the epoxy resin composition particles, and an average of minimum diameters of fiber cross-sections is determined as a number average fiber diameter.

4. The epoxy resin composition particle according to any one of 1. to 3.,
in which the fibrous or acicular filler includes one or two or more selected from the group consisting of a wollastonite fiber, a glass fiber, a metal fiber, a carbon fiber, fibrous aluminum oxide, an aramid fiber, a silicon carbide whisker, a silicon nitride whisker, and a potassium titanate whisker.
5. The epoxy resin composition particle according to any one of 1. to 4.,

in which a spiral flow measured by the following procedure is equal to or more than 30 cm,
(procedure)
using a low-pressure transfer molding machine, the epoxy resin composition particles are injected into a mold for spiral flow measurement according to EMMI-1-66 under conditions of a mold temperature of 175°C, an injection pressure of 6.9 MPa, and a curing time of 120 seconds, and a flow length (cm) is measured.

6. The epoxy resin composition particle according to any one of 1. to 5.,
in which a content of the fibrous or acicular filler is equal to or more than 5% by mass and equal to or less than 80% by mass in 100% by mass of the epoxy resin composition particles.
7. The epoxy resin composition particle according to any one of 1. to 6.,
in which the epoxy resin includes a cresol novolac type epoxy resin and/or a bisphenol A type epoxy resin.
8. The epoxy resin composition particle according to any one of 1. to 7.,
in which the epoxy resin composition particle contains one or two or more curing catalysts selected from the group consisting of an imidazole-based catalyst and a phosphorus-based catalyst.
9. The epoxy resin composition particle according to any one of 1. to 8.,
in which the epoxy resin composition particle is used for being molded into a tablet through a step of supplying the epoxy resin composition particles into a heated extruder and kneading the epoxy resin composition particles while melting the particles to obtain an epoxy resin molding material; and a step of cutting the epoxy resin molding material while continuously extruding the molten epoxy resin molding material through an opening part at an extruder tip, to obtain the tablet.
10. A tablet formed using the epoxy resin composition particles according to any one of 1. to 9.,
the tablet having a volume of equal to or more than 5 $cm^3$ and equal to or less than 1500 $cm^3$.
11. A method for producing a columnar tablet, the method including:

a step of preparing the epoxy resin composition particles according to any one of 1. to 9.;
a step of supplying the epoxy resin composition particles into a heated extruder and kneading the epoxy resin composition particles while melting the particles, to obtain an epoxy resin molding material; and
a step of cutting the epoxy resin molding material while continuously extruding the molten epoxy resin molding material through an opening part at the extruder tip, to obtain a columnar tablet,
in which a cross-sectional area of the columnar tablet is equal to or more than 3 $cm^2$ and equal to or less than 100 $cm^2$.

Hereinafter, a second reference aspect of the present embodiment will be described.

1. An epoxy resin composition particle used for any of magnet fixing, electronic control unit encapsulation, coil encapsulation, or stator core encapsulation, the epoxy resin composition particle including:

an epoxy resin; and
a fibrous or acicular filler.

2. The epoxy resin composition particle according to 1,

in which a number average fiber length of the fibrous or acicular filler, which is measured by the following procedure A, is equal to or more than 5 μm and equal to or less than 500 μm,
(procedure A)
the epoxy resin composition particles are dissolved in acetone to remove a resin component, subsequently insoluble components are dispersed on a glass plate, an image of the filler in the insoluble components is captured using an optical microscope, and a fiber length is measured using an image analyzer, and fiber lengths are measured in an order from a longest fiber length, and an average value of 100 pieces of the filler is defined as the number average fiber length,

3. The epoxy resin composition particle according to 1. or 2.,

in which when a number average fiber length of the fibrous or acicular filler measured by the following procedure A is denoted by L, and a number average fiber diameter of the fibrous or acicular filler measured by the following procedure B is denoted by D,
L/D is equal to or more than 3 and equal to or less than 100,
(procedure A)
the epoxy resin composition particles are dissolved in acetone to remove a resin component, subsequently insoluble components are dispersed on a glass plate, an image of the filler in the insoluble components is captured using an optical microscope, and a fiber length is measured using an image analyzer, and an average value of the fiber lengths of 100 pieces of the filler, starting from a longest fiber length, is defined as the number average fiber length,
(procedure B)
using a scanning electron microscope, one hundred cross-sections of a fibrous filler are measured from cross-sections of the epoxy resin composition particles, and an average of minimum diameters of fiber cross-sections is determined as a number average fiber diameter.

4. The epoxy resin composition particle according to any one of 1. to 3.,
in which the fibrous or acicular filler includes one or two or more selected from the group consisting of a wollastonite fiber, a glass fiber, a metal fiber, a carbon fiber, fibrous aluminum oxide, an aramid fiber, a silicon carbide whisker, a silicon nitride whisker, and a potassium titanate whisker.
5. The epoxy resin composition particle according to any one of 1. to 4.,

in which a spiral flow measured by the following procedure is equal to or more than 30 cm,
(procedure)
using a low-pressure transfer molding machine, the epoxy resin composition particles are injected into a mold for spiral flow measurement according to EMMI-1-66 under conditions of a mold temperature of 175°C, an injection pressure of 6.9 MPa, and a curing time of 120 seconds, and a flow length (cm) is measured.

6. The epoxy resin composition particle according to any one of 1. to 5.,
in which a content of the fibrous or acicular filler is equal to or more than 5% by mass and equal to or less than 80% by mass in 100% by mass of the epoxy resin composition particles.
7. The epoxy resin composition particle according to any one of 1. to 6.,
in which the epoxy resin includes a cresol novolac type epoxy resin and/or a bisphenol A type epoxy resin.
8. The epoxy resin composition particle according to any one of 1. to 7.,
in which the epoxy resin composition particle contains one or two or more curing catalysts selected from the group consisting of an imidazole-based catalyst and a phosphorus-based catalyst.
9. The epoxy resin composition particle according to any one of 1. to 8.,
which is used for being molded into a tablet through a step of supplying the epoxy resin composition particles into a heated extruder and kneading the epoxy resin composition particles while melting the particles to obtain an epoxy resin molding material; and a step of cutting the epoxy resin molding material while continuously extruding the molten epoxy resin molding material through an opening part at an extruder tip, to obtain the tablet.
10. A tablet formed of the epoxy resin composition particles according to any one of 1. to 9.,
the tablet having a volume of equal to or more than 5 $cm^3$ and equal to or less than 1500 $cm^3$.

11. A method for producing a columnar tablet, the method including:

a step of preparing the epoxy resin composition particles according to any one of 1. to 9.;
a step of supplying the epoxy resin composition particles into a heated extruder and kneading the epoxy resin composition particles while melting the particles, to obtain an epoxy resin molding material; and
a step of cutting the epoxy resin molding material while continuously extruding the molten epoxy resin molding material through an opening part at an extruder tip, to obtain a columnar tablet,
in which a cross-sectional area of the columnar tablet is equal to or more than 3 $cm^2$ and equal to or less than 100 $cm^2$.

[Examples]

Hereinafter, the present invention will be described in detail with reference to Examples; however, the present invention is not intended to be limited to the description of these Examples.

(1) First embodiment

(Examples 1 to 6 and Comparative Example 1)

<Preparation of epoxy resin composition particles>

A material mixture obtained by blending each of the components according to the blending amount shown in the following Table 1 was kneaded with a heating roll and cooled in a sheet shape, and the cooled material was pulverized to obtain epoxy resin composition particles (granular molding material).
The kneading conditions for the heating roll were set to a rotation speed of 20 rpm, a temperature of 120°C, and a kneading time of 5 to 10 minutes.
The details of each component in Table 1 are as follows.

· Fibrous or acicular filler 1: Glass fiber (manufactured by Nitto BoseKIco., Ltd., CS3E479)
· Fibrous or acicular filler 2: Wollastonite fiber (manufactured by NYCO Minerals, Inc., NYAD325)
· Spherical inorganic filler 1: Glass beads (manufactured by UNITIKA LTD., UNIBEADS UB-13L)
· Spherical inorganic filler 2: Fused silica (manufactured by Fumitech Industrial Co., Ltd., FMT-15C)
· Colorant: Carbon black (manufactured by Mitsubishi Chemical Corporation, #750B)
· Low stress agent: Epoxy polyether-modified silicone oil (manufactured by Dow Corning Toray Co., Ltd., FZ-3730)
· Epoxy resin: Cresol novolac type epoxy resin (manufactured by DIC Corporation, N-673), softening point: 78°C
· Curing agent 1: Phenol-based curing agent (novolac type phenol resin, manufactured by Sumitomo Bakelite Co., Ltd., PR-51470), softening point: 104°C
· Curing agent 2: Phenol-based curing agent (novolac type phenol resin, manufactured by Sumitomo Bakelite Co., Ltd., PR-HF-3), softening point: 80°C
· Curing catalyst: Imidazole-based catalyst (2-phenyl-4,5-dihydroxyimidazole, manufactured by Shikoku Chemicals Corporation, 2PHZ-PW)
· Release agent: Ester wax (manufactured by Clariant Chemical Japan KK, LICOWAX OP)
· Coupling agent: Aminosilane coupling agent (manufactured by Shin-Etsu Chemical Co., Ltd., KBE-903)

<Number Average Fiber Length>

The epoxy resin composition particles were dissolved in acetone to remove the resin component, the insoluble components were dispersed on a glass plate, an image of the filler in the insoluble components was captured using an optical microscope, and the fiber length was measured using an image analyzer. The average value of the fiber lengths of 100 pieces of the filler, starting from the longest fiber length, was defined as the above-described number average fiber length (μm).

[Table 1]

| <First Embodiment> | | | | | | | | | |
|---|---|---|---|---|---|---|---|---|---|
| Epoxy resin composition particles | | Unit | Example 1 | Example 2 | Comparative Example 1 | Example 3 | Example 4 | Example 5 | Example 6 |
| Fibrous or acicular filler | Fibrous or acicular filler 1 | % by mass | 4.8 | 20.2 | | 20.0 | 30.8 | 41.6 | 15.0 |
| | Fibrous or acicular filler 2 | | 27.5 | 29.6 | | 49.9 | 39.1 | 28.3 | 22.0 |
| Other inorganic filler | Spherical inorganic filler 1 | | 42.7 | 21.3 | | | | | 32.9 |
| | Spherical inorganic filler 2 | | | | 80.7 | | | | |
| Additive | Colorant | | 0.3 | 0.3 | 0.3 | 0.3 | 0.3 | 0.3 | 0.3 |
| | Low stress agent | | 2.0 | 2.0 | 2.0 | 2.0 | 2.0 | 2.0 | 2.0 |
| Epoxy re-sin | Epoxy re-sin | | 15.8 | 17.0 | 10.7 | 17.5 | 17.5 | 17.5 | 17.5 |
| Curing agent | Curing agent 1 | | 5.8 | 8.5 | | 9.2 | 9.2 | 9.2 | 9.2 |
| | Curing agent 2 | | | | 5.3 | | | | |
| Curing catalyst | | | 0.4 | 0.4 | 0.3 | 0.4 | 0.4 | 0.4 | 0.4 |
| Release agent | | | 0.5 | 0.5 | 0.5 | 0.5 | 0.5 | 0.5 | 0.5 |
| Coupling agent | Silane coupling agent | | 0.2 | 0.2 | 0.2 | 0.2 | 0.2 | 0.2 | 0.2 |
| Total | | | 100.0 | 100.0 | 100.0 | 100.0 | 100.0 | 100.0 | 100.0 |
| Number average fiber length | | μm | 205 | 257 | - | 244 | 231 | 192 | 254 |
| Spiral flow | | cm | 150 | 128 | 60 | 140 | 113 | 75 | 117 |
| Bending test | Flexural modulus | GPa | 13.0 | 14.0 | 11.0 | 15. 0 | 15.1 | 14.4 | 13. 1 |
| K1C (relative value) | | | 1.1 | 1.6 | 1.0 | 1.5 | 1.6 | 1.6 | 1.4 |

The obtained epoxy resin composition particles were evaluated according to the following items.

<Spiral Flow>

Using a low-pressure transfer molding machine (manufactured by KOHTAKICorporation, KTS-15), the obtained epoxy resin composition particles were injected into a mold for spiral flow measurement according to EMMI-1-66 under the conditions of a mold temperature of 175°C, an injection pressure of 6.9 MPa, and a pressure retention time of 120 seconds, and a flow length was measured.

<Bending Test: Flexural Modulus>

The epoxy resin composition particles obtained as described above were subjected to tablet molding to obtain a tablet. The obtained tablet was subjected to injection molding using a transfer molding machine under conditions of a mold temperature of 175°C, an injection pressure of 9.8 MPa, and a curing time of 120 seconds, and a test piece was obtained as a cured product having a width of 10 mm × a thickness of 4 mm × a length of 80 mm.
The flexural modulus (GPa) of the obtained test piece at room temperature was measured according to JIS K 6911.

<K1c>

Using a transfer molding machine, a molded body was molded from the epoxy resin composition particles under molding conditions of a mold temperature of 175°C, an injection pressure of 9.8 MPa, and a curing time of 120 seconds.
According to a KIc method standardized in ASTM D5045-14, the obtained molded body was adjusted to a size of a length of 50 mm, a width B of 5 mm, and a thickness W of 10 mm, a notch having a depth of 3.5 mm in a thickness direction was formed in a central part in the length direction, and the obtained molded body was cured at 175°C for 4 hours to obtain a cured product. In addition, a scratch having a depth of 0.1 mm in the thickness direction was made with a razor on the notch tip portion of the cured product, and a test piece having a total crack length a = 3.6 mm was produced.
Subsequently, as shown in the outline of Fig. 3, a three-point bending test was performed on the obtained test piece 10 using a tensile compression tester (STB-1225S type Tensilon manufactured by ORIENTEC CO., LTD.) at a measurement temperature of 25°C, a speed of 10 mm/min, and a distance S between fulcrums of 40 mm, and the fracture toughness value (K1c (MPa·$m^{1/2}$)) was calculated based on the following expression. In the following expression, $P_Q$ is the maximum load (N). The tensile compression tester in Fig. 3 includes a loading pin 12 having a diameter of 10 mm and two R-processed round fulcrums 14.

$$KI_C = ((P_Q \times S)/(B \times W^{3/2})) \times f(a/W)$$

Provided that $f(a/W) = (3(a/W)^{1/2}[1.99 - (a/W)(1 - a/W)\{2.15 - 3.9(a/W) + 2.7(a/W)^2\}])/(2\{1 + 2(a/W)\}\{1 - (a/W)\}^{3/2})$.
In a case where the fracture toughness value of Comparative Example 1 calculated as described above was standardized to 1.0, relative values of the fracture toughness values of Examples 1 to 6 are shown in Table 1.
From the above results, the epoxy resin composition particles of Examples 1 to 6 in Table 1 showed results with high flexural moduli as compared with Comparative Example 1. Furthermore, it was found that the epoxy resin composition particles of Examples 1 to 6 in Table 1 also have excellent fracture toughness. The epoxy resin composition particles of Examples 1 to 6 in Table 1 can be suitably used for magnet fixing, electronic control unit encapsulation, coil encapsulation, or stator core encapsulation.

(2) Second Embodiment

(Examples 1 to 5 and Comparative Example 1)

<Preparation of epoxy resin composition particles>

A material mixture obtained by blending each of the components according to the blending amount shown in the following Table 2 was kneaded with a heating roll and cooled in a sheet shape, and the cooled material was pulverized to obtain epoxy resin composition particles (granular molding material).
The kneading conditions for the heating roll were set to a rotation speed of 20 rpm, a temperature of 120°C, and a kneading time of 5 to 10 minutes.

(Comparative Example 2)

Epoxy resin composition particles (granular molding material) were obtained in the same manner as in Example 1 according to the blending amounts and the components in Table 2, except that the temperature in the kneading conditions for the heating roll was set to 90°C.
The details of each component in Table 2 are as follows.

· Fibrous or acicular filler 1: Glass fiber (manufactured by Nitto BoseKIco., Ltd., CS3E479)
· Fibrous or acicular filler 2: Wollastonite fiber (manufactured by NYCO Minerals, Inc., NYAD325)
· Spherical inorganic filler 1: Glass beads (manufactured by UNITIKA LTD., UNIBEADS UB-13L)

· Spherical inorganic filler 2: Fused silica (manufactured by Fumitech Industrial Co., Ltd., FMT-15C)
· Colorant: Carbon black (manufactured by Mitsubishi Chemical Corporation, #750B)
· Low stress agent: Epoxy polyether-modified silicone oil (manufactured by Dow Corning Toray Co., Ltd., FZ-3730)
· Epoxy resin: Cresol novolac type epoxy resin (manufactured by DIC Corporation, N-673), softening point: 78°C
· Curing agent 1: Phenol-based curing agent (novolac type phenol resin, manufactured by Sumitomo Bakelite Co., Ltd., PR-51470), softening point: 104°C
· Curing agent 2: Phenol-based curing agent (novolac type phenol resin, manufactured by Sumitomo Bakelite Co., Ltd., PR-HF-3), softening point: 80°C
· Curing catalyst: Imidazole-based catalyst (2-phenyl-4,5-dihydroxyimidazole, manufactured by Shikoku Chemicals Corporation, 2PHZ-PW)
· Release agent: Ester wax (manufactured by Clariant Chemical Japan KK, LICOWAX OP)
· Coupling agent: Aminosilane coupling agent (manufactured by Shin-Etsu Chemical Co., Ltd., KBE-903)

<Number Average Fiber Length>

The epoxy resin composition particles were dissolved in acetone to remove the resin component, the insoluble components were dispersed on a glass plate, an image of the filler in the insoluble components was captured using an optical microscope, and the fiber length was measured using an image analyzer. The average value of the fiber lengths of 100 pieces of the filler, starting from the longest fiber length, is defined as the above-described number average fiber length (μm).

[Table 2]

<Second Embodiment>

| Epoxy resin composition particles | | Unit | Example 1 | Comparative Example 1 | Example 2 | Example 3 | Example 4 | Example 5 | Comparative Example 2 |
|---|---|---|---|---|---|---|---|---|---|
| Fibrous or acicular filler | Fibrous or acicular filler 1 | % by mass | 20.2 | | 20.0 | 30.8 | 41.6 | 15.0 | 20.0 |
| | Fibrous or acicular filler 2 | | 29.6 | | 49.9 | 39.1 | 28.3 | 22.0 | 29.0 |
| Other inorganic filler | Spherical inorganic filler 1 | | 21.3 | | | | | 32.9 | 20.9 |
| | Spherical inorganic filler 2 | | | 80.7 | | | | | |
| Additive | Colorant | | 0.3 | 0.3 | 0.3 | 0.3 | 0.3 | 0.3 | 0.3 |
| | Low stress agent | | 2.0 | 2.0 | 2.0 | 2.0 | 2.0 | 2.0 | 2.0 |
| Epoxy resin | Epoxy resin | | 17.0 | 10.7 | 17.5 | 17.5 | 17.5 | 17.5 | 17.5 |
| Curing agent | Curing agent 1 | | 8.5 | | 9.2 | 9.2 | 9.2 | 9.2 | 9.2 |
| | Curing agent 2 | | | 5.3 | | | | | |
| Curing catalyst | | | 0.4 | 0.3 | 0.4 | 0.4 | 0.4 | 0.4 | 0.4 |
| Release agent | | | 0.5 | 0.5 | 0.5 | 0.5 | 0.5 | 0.5 | 0.5 |
| Coupling agent | Silane coupling agent | | 0.2 | 0.2 | 0.2 | 0.2 | 0.2 | 0.2 | 0.2 |
| Total | | | 100.0 | 100.0 | 100.0 | 100.0 | 100.0 | 100.0 | 100.0 |
| Number average fiber length | | μm | 257 | - | 244 | 231 | 192 | 254 | 167 |
| Spiral flow | | cm | 128 | 60 | 140 | 113 | 75 | 117 | 154 |
| Bending test | Flexural modulus | GPa | 14.0 | 11. 0 | 15.0 | 15.1 | 14.4 | 13. 1 | 13. 0 |
| K1C | | MPa•√m | 3.3 | 2.1 | 3.1 | 3.4 | 3.4 | 3.0 | 2.9 |

The obtained epoxy resin composition particles in Table 2 were evaluated according to the following items.

<Spiral Flow>

Using a low-pressure transfer molding machine (manufactured by KOHTAKICorporation, KTS-15), the obtained epoxy resin composition particles were injected into a mold for spiral flow measurement according to EMMI-1-66 under the conditions of a mold temperature of 175°C, an injection pressure of 6.9 MPa, and a pressure retention time of 120 seconds, and a flow length was measured.

<Bending Test: Flexural Modulus>

The epoxy resin composition particles obtained as described above were subjected to tablet molding to obtain a tablet. The obtained tablet was subjected to injection molding using a transfer molding machine under conditions of a mold temperature of 175°C, an injection pressure of 9.8 MPa, and a curing time of 120 seconds, and a test piece was obtained as a cured product having a width of 10 mm × a thickness of 4 mm × a length of 80 mm.

The flexural modulus (GPa) of the obtained test piece at room temperature was measured according to JIS K 6911.

<K1c>

Using a transfer molding machine, a molded body was molded from the epoxy resin composition particles under molding conditions of a mold temperature of 175°C, an injection pressure of 9.8 MPa, and a curing time of 120 seconds.

According to a KIc method standardized in ASTM D5045-14, the obtained molded body was adjusted to a size of a length of 50 mm, a width B of 5 mm, and a thickness W of 10 mm, a notch having a depth of 3.5 mm in a thickness direction was formed in a central part in the length direction, and the obtained molded body was cured at 175°C for 4 hours to obtain a cured product. In addition, a scratch having a depth of 0.1 mm in the thickness direction was made with a razor on the notch tip portion of the cured product, and a test piece having a total crack length a = 3.6 mm was produced.

Subsequently, as shown in the outline of Fig. 3, a three-point bending test was performed on the obtained test piece 10 using a tensile compression tester (STB-1225S type Tensilon manufactured by ORIENTEC CO., LTD.) at a measurement temperature of 25°C, a speed of 10 mm/min, and a distance S between fulcrums of 40 mm, and a fracture toughness value (K1c (MPa·$m^{1/2}$)) was calculated based on the following expression. In the following expression, $P_Q$ is a maximum load (N). The tensile compression tester in Fig. 3 includes a loading pin 12 having a diameter of 10 mm and two R-processed round fulcrums 14.

$$KI_C = ((P_Q \times S)/(B \times W^{3/2})) \times f(a/W)$$

Provided that $f(a/W) = (3(a/W)^{1/2}[1.99 - (a/W)(1 - a/W)\{2.15 - 3.9(a/W) + 2.7(a/W)^2\}])/(2\{1 + 2(a/W)\}\{1 - (a/W)\}^{3/2})$.

The fracture toughness values calculated as described above are shown in Table 1.

<Evaluation of Gap During Filling>

Forty sheets of an electromagnetic steel sheet having a diameter of 130 mm and a thickness of 0.35 mm were stacked, and a magnet was inserted into the hole part of the stacked steel sheets.

The above-described unit was regarded as one stage, a total of five stages were stacked by shifting the phase of the circumferential length of 2 mm with respect to the stages having different heights, and a rotor structure having a skew structure was prepared.

A workpiece was attached to a mold, and the epoxy resin composition particles were injected into the separation part between the hole part and the magnet in the above-described rotor structure using a transfer molding machine, under the conditions of a mold temperature of 175°C, an injection pressure of 4 MPa, and a pressure retention time of 180 seconds.

For each stage of the obtained molded body, the presence or absence of a gap was checked with a clearance gauge.

A case in which a clearance gauge of 0.02 mm cannot be inserted is rated as good, and a case in which a clearance gauge of equal to or more than 0.02 mm is inserted is rated as poor.

In the above-described evaluation of the gap during filling, Examples 1 to 5 showed good results, and Comparative Examples 1 and 2 showed poor results.

From the above results, the epoxy resin composition particles of Examples 1 to 5 in Table 2 showed higher values of K1c as compared with Comparative Examples 1 and 2, and showed a result that the occurrence of gaps was suppressed

when filled into a skew structure.

Such epoxy resin composition particles of Examples 1 to 5 in Table 2 can be suitably used for magnet fixing.

This application claims priority based on Japanese Patent Application No. 2023-071045 filed April 24, 2023, and Japanese Patent Application No. 2023-071046 filed April 24, 2023, the entire disclosures of which are incorporated herein by reference.

REFERENCE SIGNS LIST

1 epoxy resin composition particle
2 hopper
41 heater
42 screw
43 cylinder
43a input side cylinder
5 die
51 temperature regulator
6 extruded material
10 test piece
12 loading pin
14 round fulcrum
100 injection molding apparatus
15 mold
16 cavity
20 injection molding machine
21 cylinder
22 screw
23 hopper
24 heater
25 nozzle
26 check valve
30 in-vehicle electronic control unit
32 wiring board
34 encapsulation resin
36 electronic component
38 connection terminal
40 through-hole

## Claims

**1.** An epoxy resin composition particle used for any of magnet fixing, electronic control unit encapsulation, coil encapsulation, or stator core encapsulation, the epoxy resin composition particle comprising:

an epoxy resin; and
a fibrous or acicular filler.

**2.** An epoxy resin composition particle used for magnet fixing, the epoxy resin composition particle comprising:

an epoxy resin; and
a fibrous or acicular filler,
wherein a fracture toughness value (K1c) measured by the following procedure i is equal to or more than 3.0 MPa·$m^{1/2}$,
(procedure i)
using a transfer molding machine, a molded body is molded from the epoxy resin composition particles under molding conditions of a mold temperature of 175°C, an injection pressure of 9.8 MPa, and a curing time of 120 seconds,

according to a KIc method standardized in ASTM D5045-14, the obtained molded body is adjusted to a size of a length of 50 mm, a width B of 5 mm, and a thickness W of 10 mm, a notch having a depth of 3.5 mm in a thickness direction is formed in a central part in a length direction, and the obtained molded body is cured at 175°C for 4 hours to obtain a cured product, a scratch having a depth of 0.1 mm in the thickness direction is made with a razor on a notch tip portion of the cured product, and a test piece having a total crack length a = 3.6 mm is produced, subsequently, the obtained test piece is subjected to a three-point bending test using a tensile compression tester at a measurement temperature of 25°C, a speed of 10 mm/min, and a distance S between fulcrums of 40 mm, and a fracture toughness value (K1c (MPa·$m^{1/2}$)) is calculated based on the following expression, and in the following expression, $P_Q$ is a maximum load (N):

$$KI_C = ((P_Q \times S)/(B \times W^{3/2})) \times f(a/W)$$

provided that $f(a/W) = (3(a/W)^{1/2}[1.99 - (a/W)(1 - a/W)\{2.15 - 3.9(a/W) + 2.7(a/W)^2\}])/(2\{1 + 2(a/W)\}\{1 - (a/W)\}^{3/2})$.

**3.** The epoxy resin composition particle according to Claim 1 or 2,

wherein a number average fiber length of the fibrous or acicular filler, which is measured by the following procedure A, is equal to or more than 5 μm and equal to or less than 500 μm,
(procedure A)
the epoxy resin composition particles are dissolved in acetone to remove a resin component, subsequently insoluble components are dispersed on a glass plate, an image of the filler in the insoluble components is captured using an optical microscope, and a fiber length is measured using an image analyzer, and an average value of the fiber lengths of 100 pieces of the filler, starting from a longest fiber length, is defined as the number average fiber length.

**4.** The epoxy resin composition particle according to Claim 1 or 2,

wherein when a number average fiber length of the fibrous or acicular filler measured by the following procedure A is denoted by L, and a number average fiber diameter of the fibrous or acicular filler measured by the following procedure B is denoted by D,
L/D is equal to or more than 3 and equal to or less than 100,
(procedure A)
the epoxy resin composition particles are dissolved in acetone to remove a resin component, subsequently insoluble components are dispersed on a glass plate, an image of the filler in the insoluble components is captured using an optical microscope, and a fiber length is measured using an image analyzer, and fiber lengths are measured in an order from a longest fiber length, and an average value of 100 pieces of the filler is defined as the number average fiber length,
(procedure B)
using a scanning electron microscope, one hundred cross-sections of a fibrous filler are measured from cross-sections of the epoxy resin composition particles, and an average of minimum diameters of fiber cross-sections is determined as a number average fiber diameter.

**5.** The epoxy resin composition particle according to Claim 1 or 2,
wherein the fibrous or acicular filler includes one or two or more selected from the group consisting of a wollastonite fiber, a glass fiber, a metal fiber, a carbon fiber, fibrous aluminum oxide, an aramid fiber, a silicon carbide whisker, a silicon nitride whisker, and a potassium titanate whisker.

**6.** The epoxy resin composition particle according to Claim 1 or 2,

wherein a spiral flow measured by the following procedure ii is equal to or more than 30 cm,
(procedure ii)
using a low-pressure transfer molding machine, the epoxy resin composition particles are injected into a mold for spiral flow measurement according to EMMI-1-66 under conditions of a mold temperature of 175°C, an injection pressure of 6.9 MPa, and a curing time of 120 seconds, and a flow length (cm) is measured.

**7.** The epoxy resin composition particle according to Claim 1 or 2,
wherein a content of the fibrous or acicular filler is equal to or more than 5% by mass and equal to or less than 80% by mass in 100% by mass of the epoxy resin composition particles.

**8.** The epoxy resin composition particle according to Claim 1 or 2,
wherein the epoxy resin includes a cresol novolac type epoxy resin and/or a bisphenol A type epoxy resin.

**9.** The epoxy resin composition particle according to Claim 1 or 2,
wherein the epoxy resin composition particle contains one or two or more curing catalysts selected from the group consisting of an imidazole-based catalyst and a phosphorus-based catalyst.

**10.** The epoxy resin composition particle according to Claim 1 or 2,
wherein the epoxy resin composition particle is used for being molded into a tablet through a step of supplying the epoxy resin composition particles into a heated extruder and kneading the epoxy resin composition particles while melting the particles to obtain an epoxy resin molding material; and a step of cutting the epoxy resin molding material while continuously extruding the molten epoxy resin molding material through an opening part at an extruder tip, to obtain the tablet.

**11.** The epoxy resin composition particle according to Claim 1 or 2, which is intended for injection molding,
wherein, in injection molding that uses an injection molding apparatus including an injection unit consisting of a cylinder and a screw inserted into the cylinder, and a mold connected to the injection unit and having a cavity, the epoxy resin composition particles are charged into the cylinder and used.

**12.** The epoxy resin composition particle according to Claim 1 or 2,
wherein the epoxy resin composition particle contains an epoxy resin having a softening point of lower than 110°C, or a curing agent.

**13.** A tablet formed using the epoxy resin composition particles according to Claim 1 or 2,
the tablet having a volume of equal to or more than 5 $cm^3$ and equal to or less than 1500 $cm^3$.

**14.** A method for producing a columnar tablet, the method comprising:

a step of preparing the epoxy resin composition particles according to Claim 1 or 2;
a step of supplying the epoxy resin composition particles into a heated extruder and kneading the epoxy resin composition particles while melting the particles, to obtain an epoxy resin molding material; and
a step of cutting the epoxy resin molding material while continuously extruding the molten epoxy resin molding material through an opening part at an extruder tip, to obtain a columnar tablet,
in which a cross-sectional area of the columnar tablet is equal to or more than 3 $cm^2$ and equal to or less than 100 $cm^2$.

**15.** A structure formed using the epoxy resin composition particles according to Claim 1 or 2.

**16.** A method for producing the structure according to Claim 15, using an injection molding apparatus including an injection unit consisting of a cylinder and a screw inserted into the cylinder, and a mold connected to the injection unit and having a cavity, the method comprising:

a step of melting the epoxy resin composition particles in the cylinder to obtain a molten resin composition; and
a step of injecting the molten resin composition through a screw tip to fill the cavity with the molten resin composition.

**17.** The method for producing a structure according to Claim 16,
wherein in the step of filling, a temperature T at the screw tip is 60°C to 100°C.

**18.** The method for producing a structure according to Claim 16,
wherein in the step of filling, a temperature inside the cavity is 150°C to 180°C.

[Fig.1]

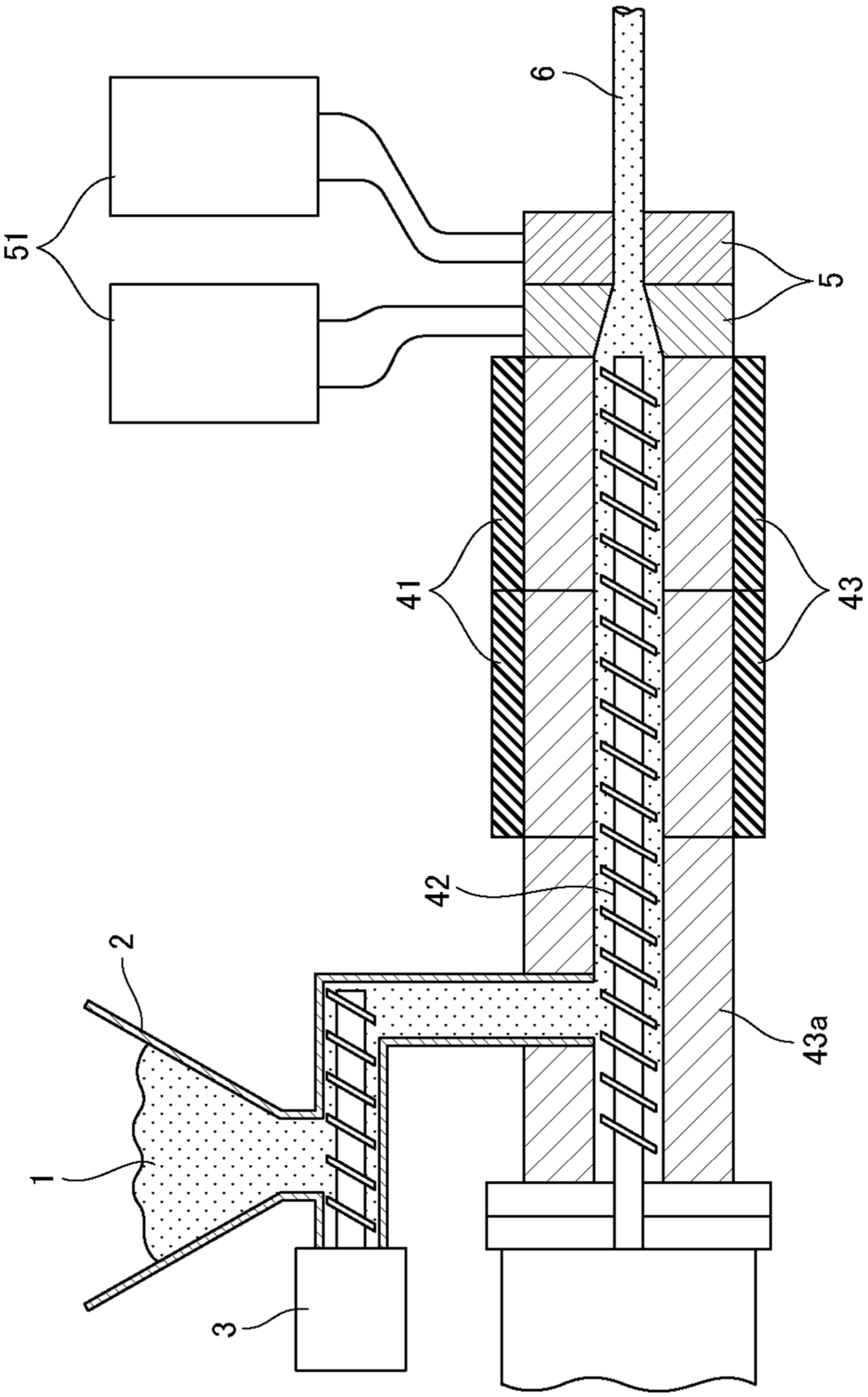

[Fig.2]

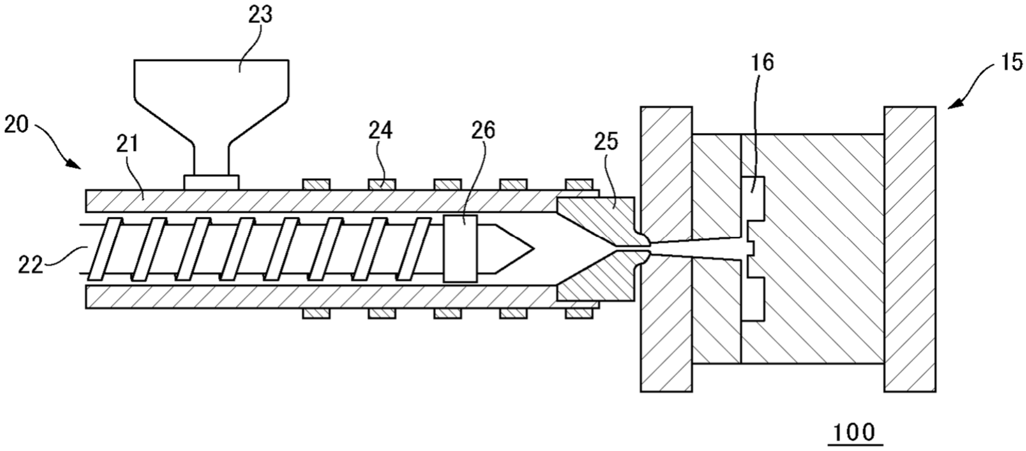


[Fig.3]

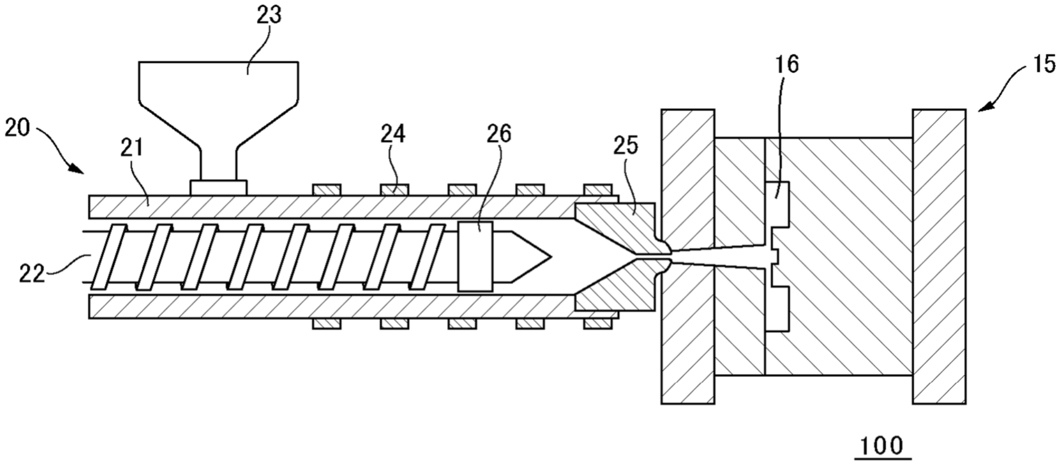

**INTERNATIONAL SEARCH REPORT**

International application No. **PCT/JP2024/015723**

**A. CLASSIFICATION OF SUBJECT MATTER**

***C08L 63/00***(2006.01)i; ***C08J 3/12***(2006.01)i; ***C08K 3/013***(2018.01)i; ***C08K 7/02***(2006.01)i
FI: C08L63/00 C; C08J3/12 Z CFC; C08K3/013; C08K7/02

According to International Patent Classification (IPC) or to both national classification and IPC

**B. FIELDS SEARCHED**

Minimum documentation searched (classification system followed by classification symbols)

C08L63/00; C08J3/12; C08K3/013; C08K7/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2004-256647 A (MATSUSHITA ELECTRIC WORKS, LTD.) 16 September 2004 (2004-09-16) claims, paragraphs [0015]-[0020], examples | 1, 3-9, 12, 15 |
| Y | | 2, 10-11, 13-14, 16-18 |
| X | JP 2022-156131 A (SUMITOMO BAKELITE CO., LTD.) 14 October 2022 (2022-10-14) claims, paragraphs [0026]-[0029], examples | 1, 3-18 |
| Y | | 2, 10-11, 13-14, 16-18 |
| X | JP 2022-125506 A (SUMITOMO BAKELITE CO., LTD.) 29 August 2022 (2022-08-29) claims, examples | 1, 3-18 |
| A | | 2 |
| X | JP 2021-167378 A (SUMITOMO BAKELITE CO., LTD.) 21 October 2021 (2021-10-21) claims, examples | 1, 3-18 |
| A | | 2 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **04 July 2024** | **16 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

INTERNATIONAL SEARCH REPORT

International application No.
**PCT/JP2024/015723**

**C. DOCUMENTS CONSIDERED TO BE RELEVANT**

| Category* | Citation of document, with indication, where appropriate, of the relevant passages | Relevant to claim No. |
|---|---|---|
| P, A | WO 2023/176958 A1 (TERAOKA SEISAKUSHO CO., LTD.) 21 September 2023 (2023-09-21)<br>claims, examples | 1-18 |

Form PCT/ISA/210 (second sheet) (July 2022)

**INTERNATIONAL SEARCH REPORT**
**Information on patent family members**

International application No.
**PCT/JP2024/015723**

| Patent document cited in search report | Publication date (day/month/year) | Patent family member(s) | Publication date (day/month/year) |
|---|---|---|---|
| JP 2004-256647 A | 16 September 2004 | (Family: none) | |
| JP 2022-156131 A | 14 October 2022 | EP 4088900 A1<br>claims, paragraphs [0034]-[0037], examples<br>WO 2022/209239 A1<br>KR 10-2023-0162969 A | |
| JP 2022-125506 A | 29 August 2022 | EP 4074488 A1<br>claims, examples<br>WO 2022/176486 A1<br>CN 116897191 A | |
| JP 2021-167378 A | 21 October 2021 | (Family: none) | |
| WO 2023/176958 A1 | 21 September 2023 | TW 202348675 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 9208805 A
- WO 2012029278 A
- WO 2016139985 A
- JP 2020094092 A
- JP 2023071045 A
- JP 2023071046 A